Europäisches Patentamt

European Patent Office

Office européen des brevets

(19)

(11) Veröffentlichungsnummer : **0 124 633**
**B1**

## (12) EUROPÄISCHE PATENTSCHRIFT

(45) Veröffentlichungstag der Patentschrift :
02.12.87

(21) Anmeldenummer : 83104540.6

(22) Anmeldetag : 09.05.83

(51) Int. Cl.⁴ : **B 60 R 22/36**

(54) Gurtaufrollschnellsperrautomat.

(43) Veröffentlichungstag der Anmeldung :
14.11.84 Patentblatt 84/46

(45) Bekanntmachung des Hinweises auf die Patenterteilung : 02.12.87 Patentblatt 87/49

(84) Benannte Vertragsstaaten :
DE FR GB IT SE

(56) Entgegenhaltungen :
WO-A-80 /028 23
DE-A- 2 751 362
DE-B- 2 622 241
GB-A- 1 586 594

(73) Patentinhaber : Klippan G.m.b.H Sicherheitsgeräte
Kohfurth 15 Postfach 1280
D-2000 Hamburg 3/Norderstedt (DE)

(72) Erfinder : Adomeit, H.D.
Grolmanstrasse 16
D-1000 Berlin 12 (DE)

(74) Vertreter : Weber, Dieter, Dr. et al
Dr. Dieter Weber und Klaus Seiffert Patentanwälte
Gustav-Freytag-Strasse 25 Postfach 6145
D-6200 Wiesbaden 1 (DE)

## Beschreibung

Die Erfindung betrifft einen Gurtaufrollschnellsperrautomaten mit einem Hauptgehäuse, einer Wickelachse mit zugeordneter Wickelfeder und aufgewickeltem Gurtband sowie mit einem Blockiermechanismus, bestehend aus einem Massenkraftsensor, einer beweglich angeordneten Blockierklinke, einem Blockierzahnrad, einem konzentrisch zur Wickelachse im Gehäuse gelagerten Steuerteil mit einer konzentrisch zur Wickelachse und gegenüber derselben frei dreh- baren Arretierantriebsscheibe mit Innenverzah- nung, einem Steuerzahnrad mit Außenverzah- nung und einer frei drehbar gelagerten Klinke, und mit einer Drehträgheitsmasse zum Betätigen der Blockierklinke bei übermäßiger Gurtbandbeschleunigung.

Ein Sperrautomat der vorstehend genannten Art ist aus der DE-B-26 22 241 bekannt. Bei dem Sperrautomaten gemäß dieser Druckschrift ist jedoch die Drehträgheitsmasse mit dem Steuerzahnrad identisch. Die Klinke ist als einarmiger Hebel ausgebildet und auf dem Steuerzahnrad und damit auch auf der Drehträgheitsmasse drehbar gelagert. Durch die Lagerung der Klinke auf der Drehträgheitsmasse steht die Klinke in keiner festen Winkelbeziehung zur Wickelachse. Aufgrund von Fertigungstoleranzen kann es durch diese Lagerung der Klinke zu unerwünschten « Zahn-auf-Zahn-Operationen » zwischen Blockierklinke und Blockierzahnrad kommen, wo- durch Beschädigungen des Automaten hervorge- rufen werden können und wodurch das Sperren der Wickelachse verzögert oder überhaupt nicht erfolgt.

Bei einem anderen Sperrautomaten, wie er aus der internationalen Patentanmeldung WO-A-80- 02 823 bekannt ist, ist das Gehäuse des fahrzeugempfindlichen Massenkraftsensors einstückig mit der Arrtier-Antriebsscheibe ausgebildet, und zwar über einen über das Blockierzahnrad radial hinausstehenden Sektor, an dessen einem Ende dieser Massenkraftsensor angeordnet ist, während das gegenüberliegende Ende dieses herausstehenden Sektors in Form einer Schubnase ausgebildet ist, die mit dem freien Ende der Blockierklinke in Steuereingriff bringbar ist. Der Lager- und Haltezapfen der bekannten Blockierklinke ist bezüglich der Zähne derselben so angeordnet, daß im blockierten Zustand die Blockierklinke unter Druck steht.

Außerdem erfolgt die Steuerung des Blockierens von der Seite der gurtbandempfindlichen Einrichtung her, d. h. über die Trägheitsmasse, im Falle übermäßiger Gurtbandbeschleunigung über eine konzentrisch zur Wickelachse angeordnete Bremstrommel, die über einen Mitnehmer die Arretier-Antriebsscheibe verschieben kann, wenn bei übermäßiger Gurtbandbeschleunigung eine massenbehaftete Bremsbacke für eine rotatorische Mitnahme der Bremstrommel sorgt.

Gegenüber dem eingangs genannten Stand der Technik liegt der vorliegenden Erfindung die

Aufgabe zugrunde, einen Gurtaufrollschnellsperräutomaten mit den eingangs genannten Merkmalen unter Beibehaltung kleiner Baumaße und weiterer Vereinfachung der Fertigung zu verbessern, insbesondere dahingehend, daß die bei der Massenfabrikation unweigerlich auftretenden To- leranzabweichungen keine Schwierigkeiten berei- ten und Doppelpassungsprobleme auch hochlast- tragender Teile vermieden werden.

Diese Aufgabe wird erfindungsgemäß dadurch gelöst, daß das Steuerteil den Massenkraftsensor trägt, daß die Arretier-Antriebsscheibe zum Einrasten der Blockierklinke in das Blockierzahnrad eine Steuerkurve aufweist, daß die Drehträgheitsmasse relativ zum Steuerzahnrad beweglich angeordnet ist, daß die Lagerstelle der Klinke unter Bildung eines langen und eines kurzen Hebels außermittig angeordnet ist und daß an der Drehträgheitsmasse Vorsprünge mit den Enden der Klinke in Eingriff bringbar sind.

Ein derartiger Automat hat den Vorteil, daß die bei der Massenfabrikation üblicherweise auftre- tenden Toleranzabweichungen keinerlei Schwie- rigkeiten bereiten, d. h. auf die Funktion des Automaten keinen Einfluß haben. Weiterhin ist gewährleistet, daß « Zahn-auf-Operationen » zwi- schen Blockierklinke und Blockierzahnrad ausge- schlossen sind.

Ein weiterer Vorteil dieses Automaten besteht darin, daß die Sensor- bzw. Auslösemechanismen, die auf Fahrzeug- bzw. Gurtbandbeschleunigung reagieren, völlig unabhängig voneinander arbeiten, wodurch eine erhöhte Funktionssicherheit gegeben ist.

Weiterhin kann man durch die Maßnahmen gemäß der Erfindung unabhängig von Fertigungstoleranzen einen ausbalancierten Zustand der Klinke in der ausgelenkten oder Ruhelage erreichen. Um die Baulänge des Sperrautomaten gemäß der Erfindung kurz zu halten, besteht das Steuerteil einerseits aus der Arretier-Antriebsscheibe und andererseits aus dem parallel dazu angeordneten Steuerzahnrad. Sinn des Aufbaues ist im Unfallmoment die Drehbewegung der Arretier-Antriebsscheibe, damit diese über eine Steuerkurve die Blockierklinke in Eingriff mit dem Blockierzahnrad und zum Zurückhalten des Gurtbandes bringt. Diese Drehbewegung der Arretier- Antriebsscheibe erreicht man über zwei Steuer- einrichtungen, nämlich einerseits den fahrzeu- gempfindlichen Massenkraftsensor, der zumeist in anderen bekannten Einrichtungen eine unter einer Sensorklinke angeordnete Kugel oder dergleichen aufweist, so daß bei hochgeschwenkter Sensorklinke die Arrtier-Antriebsscheibe den Drehimpuls von dem mit der Wickelachse mit- drehenden Steuerzahnrad erhält. Die gurtban- dempfindliche Masse hingegen ist eine scheiben- oder plattenförmige Schwungmasse, welche über die erwähnten Vorsprünge, die in gewissen, noch zu beschreibenden Grenzen frei drehbare Klinke und über die Innenverzahnung der Arretier-Antriebsscheibe dieser ebenfalls einen Drehimpuls mitteilt.

Es ist somit verständlich, weshalb die Arretier-Antriebsscheibe ebenso wie das Steuerzahnrad mit Zahnungen versehen sein müssen und über welche Mittel die im Normalzustand in etwa stationär verbleibende Arretier-Antriebsscheibe bei unerwünschten Beschleunigungen den gewünschten Drehimpuls bekommt. Das besonders Unerwartete ist nun die Bildung eines langen und eines kurzen Hebels der Klinke durch die entsprechende Anordnung der Lagerstelle derselben. Diese ist ein Zapfen bzw. ein einen Zapfen aufnehmendes Loch und erfindungsgemäß außerhalb der Klinkenmitte angeordnet. Durch ein Nacheilen der Schwungmasse im Unfallmoment gegenüber dem Steuerzahnrad drückt der eine Schwungmassenvorsprung von unten gegen das Ende des langen Hebels, während gleichzeitig der am Ende des kurzen Hebels angeordnete Vorsprung so außer Eingriff bewegt wird, daß die Klinke in Eingriff mit den Innenzähnen der Arretier-Antriebsscheibe gelangt und den Drehimpuls übertragen kann.

Andererseits kann man sich im Ruhezustand vorstellen, daß die Klinke schmiegend im Umfang des Steuerzahnrades liegt, so daß sich dieses ungehindert gegenüber der Arretier-Antriebsscheibe und der Wickelachse drehen kann. Es ist zu beachten, daß die Klinke erfindungsgemäß nicht etwa durch eine eigene Feder in dieser Ruhelage gehalten wird, wie das bei anderen bekannten Sperrautomaten häufig der Fall ist, sondern nur durch die zwei an der Schwungmasse angebrachten Vorsprünge.

Zweckmäßig ist es dabei, wenn die Drehträgheitsmasse als Schwungscheibe mit einseitig aus dieser herausstehenden Zapfen ausgebildet ist. Selbstverständlich könnte man je nach Anordnung der Schwungscheibe vor oder hinter dem Steuerzahnrad auch einige Zapfen nach der einen und andere Zapfen nach der anderen Seite herausstehend vorsehen. Es ist zwar an sich in anderem Zusammenhang schon bekannt, eine Drehträgheitsmasse als Schwungscheibe auszubilden, in der vorliegenden Erfindung ergibt sich aber durch die von einer Seite dieser Schwungscheibe herausstehenden Zapfen und den Eingriff derselben mit der Klinke am Steuerzahnrad eine Besonderheit, welche eine unerwartete Vereinfachung der Fertigung erlaubt, weil sich eine Selbsteinstellung eines ausbalancierten Zustandes der Klinke unabhängig von Fertigungstoleranzen ergibt, wie nachfolgend ausführlich noch erläutert wird.

Diesen Vorteil der Selbsteinstellung eines ausbalancierten Zustandes der Klinke erreicht man sowohl bei Ausbildung der Drehträgheitsmasse als Schwungscheibe gemäß den vorstehenden Merkmalen als auch bei vorteilhafter weiterer Ausgestaltung der Erfindung dann, wenn die Drehträgheitsmasse eine ebene, parallel zur Ebene des Steuerzahnrades liegende Platte mit Ausnehmungen ist, deren Enden die Vorsprünge für den Eingriff mit der Klinke sind, und wenn die Klinke in einer Ausnehmung in derselben Ebene aufgenommen und drehbar gelagert ist wie die Trägheitsplatte. Beispielsweise kann man sich eine Schwungscheibe als Platte vorstellen, die am Umfang nicht kreisrund sondern auf zwei bezüglich des Drehmittelpunktes diametral gegenüberliegenden Seiten durch kalottenförmige, dreieckige, gebogene Ausnehmungen oder dergleichen abgeflacht und am Umfang unterbrochen ist, so daß nur die dazwischenliegenden Bereiche des Umfanges noch auf dem Kreis liegen. Stellt man sich beispielsweise längs des Umfanges über einen Winkel von etwa 120 bis 90° eine parallel zum Umfang verlaufende längliche, gebogene Ausnehmung vor, so kann man vorzugsweise bei gekrümmter Ausgestaltung der Klinke diese wiederum schmiegend im Umfang des Steuerzahnrades anordnen. Anfang und Ende der Ausnehmung kann dann als Vorsprung derart dienen, daß beim Nacheilen dieser Schwungplatte gegenüber dem Steuerzahnrad die Klinke herausgehoben wird und den Sperrvorgang einleitet. Sehr raumsparend ist es hierbei, wenn die Klinke in derselben Ebene wie die Trägheitsplatte vor der scheibenförmigen oder ringförmigen Grundplatte des Steuerzahnrades oder dahinter angeordnet ist. Vorzugsweise kann auf der der Klinke gegenüberliegenden Seite in der dort ähnlich ausgestalteten Ausnehmung in der Trägheitsplatte Raum für die Anordnung einer Feder vorgesehen sein, welche die Trägheitsplatte gegenüber dem Steuerzahnrad mit vorbestimmter Kraft so vorspannt, daß im Normalzustand die Klinke ausgelenkt, d. h. schmiegend im Umfang des Steuerzahnrades liegend verbleibt.

Bei vorteilhafter weiterer Ausgestaltung der Erfindung sind von der Hauptebene des Steuerzahnrades nach einer Seite hin ein Lagerabsatz für den Innenring der Arretier-Antriebsscheibe und in radialem Abstand davon ein Lagerzapfen für die Lagerbohrung der Klinke befestigt, währenddessen auf der anderen Seite dieser Hauptebene ein Lagervorsprung für den Lagerinnenring der Schwungscheibe angebracht ist, und weiterhin ist vorgesehen, daß in Umfangsrichtung des Steuerzahnrades im Abstand voneinander Löcher für die Aufnahme von Schwungscheibenzapfen vorgesehen sind. Hierdurch läßt sich in besonders zweckmäßiger Weise die Schwungscheibe auf der einen Seite und die Arretier-Antriebsscheibe auf der anderen Seite des Steuerzahnrades anordnen, wobei beide Scheiben vom Steuerzahnrad über die Vorsprünge bzw. Absätze gelagert werden. Die im Steuerzahnrad erwähnten Löcher haben meist die Gestalt von Langlöchern, deren gebogene Länge sich etwa in Richtung des Umfanges erstreckt. Durch diese Löcher kann ein Funktionseingriff von Seiten der Schwungscheibe über die Klinke zur Antriebsscheibe hin erfolgen. Schon geringe Winkeldrehungen genügen, so daß verhältnismäßig kurze Langlöcher im Steuerzahnrad ausreichen. Die Baulänge des Sperrautomaten gemäß der Erfindung kann durch die vorstehenden Maßnahmen ersichtlich sehr kurz gehalten werden. Bedenkt man, daß das Steuerzahnrad und gegebenenfalls auch die Arretier-Antriebsscheibe große Kräfte nicht aufzunehmen haben und infolgedessen z. B. aus Kunststoff gefertigt werden können, dann erklärt sich auch die einfache Fertigung.

Die bei der Massenfabrikation solcher Sperrautomaten unweigerlich auftretenden Toleranzabweichungen bereiten bei der Fertigung eines Automaten mit den Maßnahmen dieser Erfindung insbesondere dann keinerlei Schwierigkeiten, wenn bei weiterer Ausgestaltung der Erfindung der Lagerzapfen am Steuerzahnrad im Abstand zwischen zwei Löchern derart angebracht ist, daß zwei der hindurchragenden Schwungscheibenzapfen an Schrägen an den Enden der Klinke in Eingriff bringbar sind. Zwischen diesen zwei durch das Steuerzahnrad hindurchragenden Zapfen liegt auf der der Arretier-Antriebsscheibe zugewandten Seite die Klinke axial gesichert. Unter der Voraussetzung, daß die Schwungscheibe mit dem Steuerzahnrad mitdreht, liegt die Klinke innerhalb des Außendurchmessers des Steuerzahnrades, welches sich folglich frei gegenüber der im wesentlichen stationär gehaltenen Arretier-Antriebsscheibe drehen kann. In diesem Normalzustand befindet sich also die Klinke in einer definierten und nur kraftschlüssigen Ruhelage. Dies erreicht man mit den einfachen Mitteln gemäß der erfinderischen Maßnahmen mit anderen Worten dadurch, daß die beiden Schwungscheibenzapfen auf einem festen Umfang in den erwähnten Löchern in dem Steuerzahnrad und nur über bestimmte Winkel, d. h. also in begrenztem Maße, drehen können. Dabei ist es zweckmäßig, wenn das Ende am kurzen Hebel als Absatz mit einer Schräge zum Schwungscheibenzapfen hin der Art ausgelegt ist, daß dieser Zapfen unter die Schräge greift und versucht, die Klinke nach innen einzurasten bzw. nach innen zu halten. Der andere bezüglich der Lagerstelle der Klinke gegenüberliegende Hebel hat am Ende vorzugsweise auch eine Schräge, diese liegt auf dem anderen Schwungscheibenzapfen, der eine Auflage dieses Klinkenendes erfordert. Man erkennt nun die definierte Ruhelage mit Kraftschluß. Der absolut stabile Ruhezustand der Schwungscheibe und der Klinke auf dem Steuerzahnrad wird in überraschender Weise außerdem unabhängig von Fertigungstoleranzen erreicht, denn die beschriebenen Teile liegen nicht an definierten Anlagen im Steuerzahnrad an sondern balancieren sich immer selbst aus.

Im Falle einer Relativbewegung zwischen der Schwungscheibe und dem Steuerzahnrad greift der am Ende des längeren Hebels der Klinke liegende Schwungscheibenzapfen so ein, daß er die Klinke nach außerhalb des Außenumfanges des Steuerzahnrades herausschwenkt, weil auf dem gegenüberliegenden Ende des kurzen Hebels der dieses Ende stützende Zapfen herausbewegt ist. In diesem Moment kann die Klinke den Drehimpuls vom Steuerzahnrad auf die Arretier-Antriebsscheibe übertragen.

Deshalb ist es auch besonders vorteilhaft, wenn erfindungsgemäß die Innenzähne der Arretier-Antriebsscheibe im zusammengebauten Zustand mit der Eingriffsebene der am Steuerzahnrad gelagerten Klinke und die Außenzähne des Steuerzahnrades in der Eingriffsebene der an der Arretier-Antriebsscheibe drehbar gelagerten Sensorklinke des fahrzeugempfindlichen Massenkraftsensors angeordnet sind. Vorzugsweise wird die Arretier-Antriebsscheibe in Gestalt einer Dose ausgebildet, wobei die zylindrischen Wände innen mit den erwähnten Zähnen versehen sind, die mit der vorstehend ausführlich beschriebenen Klinke in Eingriff gebracht werden können. In einer von dieser Eingriffsebene im Abstand angeordneten anderen Eingriffsebene, nämlich der für den fahrzeugempfindlichen Massenkraftsensor, befinden sich dann die Außenzähne des Steuerzahnrades. Damit diese mit der Sensor-klinke des fahrzeugempfindlichen Sensors in Eingriff gelangen können, ist der fahrzeugempfindliche Sensor und insbesondere seine drehbar gelagerte Klinke in dieser zweitgenannten Eingriffsebene angeordnet. Auch dies erleichtert die Fertigung und erlaubt kleine Baumaße, wobei eine besondere Schonung der aus Kunststoff hergestellten Bauteile gewährleistet ist.

Zweckmäßig ist es gemäß der Erfindung ferner, wenn an der Arretier-Antriebsscheibe eine Steuerkurve für die Aufnahme und Führung eines Steuerzapfens der Blockierklinke angebracht und derart ausgelegt ist, daß der Steuerzapfen nur im unblockierten Zustand der Blockierklinke und in dessen Nahbereichen in einer zwangssteuernden Kontur der Steuerkurve liegt, während diese in den übrigen Bereichen ohne Führungseingriff mit dem Steuerzapfen freigeschnitten ist, und wenn die Zähne der Blockierklinke sowie des Blockierzahnrades selbsteinrastend gestaltet sind. Während bei dem eingangs beschriebenen Sperrautomaten der bekannten Art die Steuerkurve frei nach außen wirkt, ist die erfindungsgemäß vorgesehene Steuerkurve in einer Art Ohr allseitig umschlossen an der Arretier-Antriebsscheibe angebracht vorzugsweise an deren Außenumfang im Winkelabstand von der fahrzeugempfindlichen Sensoreinrichtung. Besonders vorteilhaft ist hierbei die Auslegung der Steuerkurve in der beschriebenen Weise. Man kann sich die Gestalt der neuen Steuerkurve etwa als Bananenform denken.

Dabei ist erfindungsgemäß darauf geachtet, daß der Blockierklinkensteuerzapfen nicht auf der gesamten Kontur fer Steuerkurve immer bündig anliegt, so daß es zu einer Zwangsführung kommt. Dann nämlich müßte wiederum streng auf die Einhaltung von Fertigungstoleranzen geachtet werden. Durch die erfindungsgemäßen Maßnahmen ist man hiervon aber unabhängig, denn die Kontur der Steuerkurve ist so gestaltet, daß sie den Steuerzapfen nur beim Einrasten in den unblockierten Zustand, d. h. bei Freigabe der Blockierklinke vom Blockierzahnrad, geführt und festgelegt ist. Zu den übrigen und von dieser Position weiter entfernt liegenden Teilen der Steuerkurve ist die Kontur freigeschnitten, damit z. B. bei Toleranzfehlern in der Produktion der Steuerzapfen sich nach dem Überlappen der Zähne der Blockierklinke mit denen des Blockierzahnrades nicht Verklemmungen eintreten. Deshalb sind die Zähne im Sinne einer Selbsteinspulung ausgestaltet. Mit anderen Worten braucht die Arretier-Antriebsscheibe der Blockierklinke über die Steuerkurve und den Steuerzapfen nur eine Vorbeschleunigung zu erteilen, so daß die Überlappung der Zähne mit dem Blockierzahnrad hergestellt wird, während danach der ganze Mechanismus sich selbst überlassen verbleiben kann. Die Selbsteinspulung oder Selbsteinrastung der Zähne der Blockierklinke einerseits und des Blockierzahnrades andererseits erfolgt durch geeignete Hinterschneidung der Zähne, so daß diese sich zu einer Volleinrastung selbst einfädeln. Selbstverständlich muß eine hinreichend große Überlappung der Zähne zwischen Klinke und Blockierzahnrad vorhanden sein, so daß trotz der freigeschnittenen Bereiche der Steuerkurve die Blockierklinke sich nach Übernahme der Vorbeschleunigung bzw. nach Empfang des Steuerimpulses selbst für die Volleinspulung sorgt. Auf diese Weise wird stets ein Verklemmen der Steuermechanik vermieden Außerdem erreicht man damit aucht eine hervorragende Schonung der aus zerbrechlicheren oder elastischeren Materialien hergestellten Bauteile, z. B. des Kunststoffes im Falle der Arretier-Antriebsscheibe und des Steuerzahnrades.

Vorteilhaft ist es gemäß der Erfindung auch, wenn der Steuerzapfen im Bereich des einen Endes der länglichen Blockierklinke und deren Lager- und Haltezapfen im Bereich deren anderen Endes angebracht sind. Durch diese Maßnahme gelangt die Blockierklinke im Blockierzustand unter Zugkräfte, im Gegensatz zu den Druckkräften beim oben beschriebenen bekannten Fall. Außerdem ist es zweckmäßig, wenn erfindungsgemäß der Lager- und Haltezapfen der Blockierklinke durch Feinstanzen geformt ist. Diese Maßnahme erlaubt eine besonders einfache Fertigung. Die ganze Blockierklinke kann damit nämlich durch Stanzen gefertigt werden, wobei man z. B. ein Blech mit einer Stärke von 4 mm in eine Feinstanzpresse gibt, die einerseits die Kontur ausstanzt und währenddessen oder danach auch den erwähnten Lager- und Haltezapfen ausprägt. Bei dem entsprechenden Prägewerkzeug geht ein geeigneter Stempel in das Material hinein und drückt das Stahlmaterial wie eine hochviskose Flüssigkeit in eine Gegenmaske. Trotz dieser einfachen Herstellungsmethode kann man in unerwarteter Weise die im Zusammenhang mit diesen Schnellsperrautomaten auftretenden Kräfte auffangen, z. B. kann ein derart hergestellter Lager- und Haltezapfen Kräfte von 1 600 kp oder dergleichen aufnehmen. Nirgends wurde bisher ein ausgeprägter Zapfen bei derart hochbelasteten Sperrelementen eingesetzt.

Zweckmäßig ist es erfindungsgemäß auch, wenn das Sensorgehäuse des fahrzeugempfindlichen Massenkraftsensors bei unterschiedlichen Einbauwinkeln um eine in der Ebene der Arretier-Antriebsscheibe liegende Achse bezüglich des Lotes drehbar und einstellbar ist. An der Arretier-Antriebsscheibe kann man sich im unteren Bereich (in Bezug auf das Lot gesehen) eine Zunge vorstellen, mit deren Hilfe das Sensorgehäuse gehaltert ist. Hierbei ist in besonders zweckmäßiger Weise vorgesehen, daß das Sensorgehäuse im oberen Bereich zwei größere Zapfen aufweist, durch welche man die vorgenannte Achse legen kann, die dann z. B. senkrecht zu der Schwenkachse der fahrzeugempfindlichen Sensorklinke selbst angeordnet ist. Um diese Achse durch die beiden oberen Drehstifte kann das Sensorgehäuse in der dieses halternden Zunge gedreht werden, wenn wegen unterschiedlicher Einbauwinkel eine erneute Justage oder Einstellung erforderlich ist. Je nach Fahrzeugtyp müssen gegebenenfalls Gurtautomaten unter unterschiedlichen Winkeln zum ortsfesten Koordinatensystem eingebaut werden. Nun ist es besonders zweckmäßig, wenn das Sensorgehäuse im Abstand von dem einen oberen Drehstift einen z. B. kleiner ausgestalteten unteren Einstellstift aufweist. Bei der Fertigung kann man diesen Einstellstift am Sensorgehäuse in verschiedenen Positionen, d. h. unter verschiedenen Winkeln bezüglich des oberen Drehstiftes, ansetzen oder am Gehäuse sogleich anspritzen, gegebenenfalls noch im Werkzeug bei der Fertigung des fahrzeugempfindlichen Massenkraftsensors, so daß sich je nach gewünschtem Winkel bei Anbringung an der Zunge unter der Arretier-Antriebsscheibe eine andere Einbaulage ergibt. Damit kann man in billiger und einfacher Weise unter Verwendung ein und desselben Sensorgehäuses und dergleichen Klinke verschiedene Einbauwinkel realisieren.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen :

Figur 1 als Exposionsdarstellung die einzelnen wichtigsten Bauteile in perspektivischer Darstellung und

Figur 2 die Draufsicht auf eine anders ausgestaltete Schwungplatte mit Steuerzahnrad und Klinke.

Um eine Gurtwickelachse 2 wird auf einer Gurtbandspule 13 das Gurtband 1 aufgespult, und es ist zwischen der abgebrochen dargestellten Spule 13 und dem Gehäuse 14 ein Innendeckel 15 gezeigt, an welchem ein Haltestift 15b angebracht ist, welcher durch die Wandstärke des Gehäuses 14 in der Zeichnung nach rechts vorn herausragt und zur Anbringung einer Haltefeder 12 vorgesehen ist.

Auf der in dem Gehäuse 14 gelagerten Wickelachse 2 ist kraftschlüssig das Blockierzahnrad 3 angeordnet, welches zwei Justierbohrungen 3a zur Aufnahme von Justierzapfen 6e des Steuerzahnrades 6 aufweist, welches sich somit ebenfalls zusammen mit der Wickelachse 2 mitdreht. Wird das Gurtband 1 zur Vergrößerung seiner Länge vom Insassen herausgezogen bzw. abgespult, dann bewegt es sich gemäß Pfeil P, so daß sich die Wickelachse 2 in Richtung des gebogenen Pfeiles 13 dreht, eine Drehrichtung, die sich dann auch bei dem Blockierzahnrad 3 und dem Steuerzahnrad 6 wiederfindet. In der Haltebohrung 14b ist der Lager- und Haltezapfen 4b der Blockierklinke 4 drehbar gelagert. Man erkennt aus der Darstellung die Herstellung dieses Lager- und Haltezapfens 4b durch Prägen und Stanzen. Wird die Blockierklinke 4 in die Verzahnung des Blockierzahnrades 3 hineingedreht, in der Darstellung also bei Drehung um den Lager- und Haltezapfen im Gegenuhrzeigersinn, dann wird die entsprechende Gurtzugkraft des Gurtbandes 1 über die Wickelachse 2, das Blockierzahnrad 3, die Blockierklinke 4 und über deren Lager- und Haltezapfen 4b in das mit dem Fahrzeugrahmen verschraubte Gehäuse 14 übertragen.

Dieses Drehen der Blockierklinke 4 um ihren Lager- und Haltezapfen 4b kann nun auf zweifache Weise eingeleitet bzw. gesteuert werden, nämlich einerseits die durch die fahrzeugsensitive Einrichtung und andererseits die durch die gurtbandsensitive Einrichtung erzeugte Blockierung.

Die auf Beschleunigungen des Fahrzeugs ansprechende Einrichtung ist der eingangs erwähnte Massenkraftsensor, nämlich die im Sensorgehäuse 9 beweglich gelagerte Kugel 9a, die unter der fahrzeugempfindlichen Sensorklinke 8 ruht, hier im Ruhe- bzw. Normalzustand gezeigt. Das Sensorgehäuse 9 ist an der Arretier-Antriebsscheibe 5 befestigt und kann somit zusammen mit dieser bewegt werden. Diese im allgemeinen aus Kunststoff gefertigte Arretier-Antriebsscheibe 5 besitzt einen Innenring 5c, der auf dem Lagerabsatz 6f des Steuerzahnrades 6 gelagert ist. Dieser Ringboden ist sozusagen der Boden einer Dose, an dessen Rand ein zylindermantelförmiger Ring mit den Innenzähnen 5d angesetzt ist. In Richtung auf das Gehäuse 14 hin ragt, am Boden der Arretier-Antriebsscheibe 5 befestigt, ein Stift 5b für die Anbringung an einer Haltefeder 12 heraus.

Im Winkelabstand zu dem Sensorgehäuse 9 ist ein Ohr 5e mit darin eingeformter Steuerkurve 5a angebracht. Diese dient der Aufnahme des Steuerzapfens 4a der Blockierklinke 4.

Es wurde oben schon festgestellt, daß das Steuerzahnrad 6 an der Wickelachse 2 mitdrehend befestigt ist. Insbesondere sorgen zwei Justierzapfen 6e, von denen in der Zeichnung nur einer dargestellt ist, für die Verbindung des Steuerzahnrades 6 mit dem Blockierzahnrad 3 (über die Justierbohrungen 3a). Da die Haltefeder 12 über den am Gehäuse 14 befestigten Haltestift 15b gehäusefest gehalten wird, bleibt auch die Arretier-Antriebsscheibe 5 infolge des Eingriffs des Stiftes 5b mit der Haltefeder 12 im großen und ganzen stationär, d. h. sie kann frei auf dem Lagerabsatz 6f des vorzugsweise aus Kunststoff hergestellten Steuerzahnrades 6 gleiten. Aber nicht nur durch die Haltefeder 12 sondern auch durch den Eingriff des Steuerzapfens 4a der Blockierklinke 4 mit der Steuerkurve 5a ist eine definierte Ausgangslage dieser Arretier-Antriebsscheibe 5 gewährleistet.

Da die Klinke 10 und die Schwungscheibe 7 für die fahrzeugsensitive Blockierung nicht von Bedeutung ist, werden jene Teile erst im nächsten Abschnitt in Verbindung mit der gurtbandsensitiven Einrichtung erörtert.

Tritt eine Fahrzeugbeschleunigung über dem Grenzwert von z. B. 0,4 g auf, dann hebt die Sensorklinke 8 durch die Verlagerung der Kugel 9a aus ihrem Sitz im Gehäuse 9 sich an und greift in die Verzahnung 6c des Steuerzahnrades 6 ein. Dieses nimmt nun bei Weiterdrehen der Wickelachse mit dem Blockierzahnrad 3 und Steuerzahnrad 6 die Arretier-Antriebsscheibe 5 mitrotierend mit. Die Rotationsbewegung der Arretier-Antriebsscheibe 5 führt zu einer Einsteuerbewegung des Steuerzapfens 4a der um den Lager- und Haltezapfen 4b drehbaren Blockierklinke 4, und zwar über die Steuerkurve 5a, in welcher der Steuerzapfen 4a der Blockierklinke 4 geführt ist. Die Zuordnung der Verzahnung 6c des Steuerzahnrades 6 zur Lage und Länge der Sensorklinke 8 einerseits sowie der Steuerkurve 5a zur Geometrie der Blockierklinke 4 andererseits ist so gestaltet, daß eine Zwangseinsteuerung ohne die Gefahr von Zahn- auf Zahn-Operationen erfolgt.

Man erkennt aus der Anordnung der Zähne des Blockierzahnrades 3 und der Blockierklinke 4, daß letztere im Blockierzustand auf Zug beansprucht wird. Da der Steuerzapfen 4a von dem Lager- und Haltezapfen 4b in verhältnismäßig großen Abstand angeordnet ist, gelingt eine recht feine Regelung über die Steuerkurve 5a der Arretier-Antriebsscheibe 5. Man erkennt die Bananenform der entsprechend konturierten Steuerkurve 5a. Die Zwangsführung ist dadurch vermieden, daß ein Anliegen des Steuerzapfens 4a an der Steuerkurve 5a zur genauen Führung nur in dem in der Figur dargestellten linken Ende der Steuerkurve vorgesehen ist. Nur in diesem Bereich legt die Kontur der Steuerkurve 5a den Steuerzapfen 4a in etwa fest. Nach oben und hinten in der Figur ist die Steuerkurve 5a hingegen freigeschnitten. Wenn sich nämlich die Zähne der Blockierklinke 4 und Blockierzahnrades 3 überlappen, erfolgt eine Selbsteinspulung, während der der Steuerzapfen 4a in der Steuerkurve 5a nicht mehr geführt und von dieser berührt zu werden braucht. In diesem letzteren Bewegungsbereich des Blockiervorganges ist der Steuerzapfen 4a praktisch frei. Mit anderen Worten führt die krafttragende Verzahnung zwischen der Blockierklinke 4 und dem Blockierzahnrad 3 beim Einspulen dazu, daß der Steuerzapfen 4a nur noch durch die Haltefeder 12 belastet wird, die Einsteuerung sicherlich aber nicht mehr durch die Steuerkurve 5a erfolgt. Dadurch vermeidet man die Zwangsführung und gibt dem Steuerzapfen 4a praktisch nur eine Vorbeschleunigung zur Einleitung des Blockiervorganges. Während man bei bekannten Mechanismen häufig Doppelpassungsprobleme auch hochlasttragender Teile hatte, wird durch die Erfindung ein Verklemmen der gesamten Steuermechanik ausgeschaltet. Deshalb kann man besonders die Bauteile der Steuermechanik aus filigranem Kunststoff aufbauen.

Die gurtbandsensitive Blockierung erfolgt über die schon erwähnte Schwungscheibe 7 und die im folgenden darzustellenden Teile am Steuerzahnrad 6. Von der Hauptebene dieses Steuerzahnrades 6 sind nach der in der Figur linken Seite hin ein Lagerabsatz 6f für den Innenring 5c der Arretier-Antriebsscheibe 5 und radialem Abstand davon ein Lagerzapfen 6a für die Lagerbohrung 10a der Klinke 10 befestigt. Auf der anderen, dem Betrachter der Figur zugewandten Seite dieser Hauptebene ist der Lagervorsprung 6h für den Lagerinnenring 7e der Schwungscheibe 7 angebracht. Außerdem erkennt man ein Langloch 6b, welches eines von drei in Umfangsrichtung des Steuerzahnrades 6 im Abstand voneinander angeordneten Löchern ist. Man kann sich in dem links vorn ausgeschnittenen Quadranten des Steuerzahnrades 6 ein weiteres Langloch denken, und im unteren Bereich ist in dem ebenfalls abgebrochen gezeigten Teil noch ein Langloch vorgesehen, welches den Stift 7d für die gurtbandsensitive Justierfeder 11 aufnehmen kann. Durch das Langloch 6b ragt der Druckzapfen 7b des Schwungrades 7, und durch das nicht gezeigte Langloch im gerade abgeschnittenen Quadranten ragt der Antriebszapfen 7c der Schwungscheibe 7 hindurch. Der Schnitt des linken oberen Quadranten liegt in der Draufsicht mitten in dem Lagerzapfen 6a für die Klinke 10, welcher durch deren Lagerbohrung 10a bzw. in diese hinein ragt. Man erkennt auch, wie der Lagerzapfen 6a im Abstand zwischen dem rechten Langloch 6b und dem links angeordnet zu denkenden anderen Langloch derart angebracht ist, daß der Druckzapfen 7b durch das Langloch 6b und der Antriebszapfen 7c durch das andere Langloch ragt. Der letztgenannte Antriebszapfen 7c kann mit der gezeigten Schräge am linken Ende 10c des langen Hebels 10e angreifen, während das Ende des Druckzapfens 7b an der Schräge oder dem Absatz 10d am Ende des kurzen Hebels 10f angreift. Der lange Hebel 10e ist bei dieser Ausführungsform viermal so lang wie der kurze Hebel 10f der Klinke 10.

Im Normalbetrieb nimmt die gurtbandsensitive Justierfeder 11 zwischen dem Stift 7d des Schwungrades 7 und dem Haltezapfen 6d am Steuerzahnrad 6 die Schwungscheibe 7 in Drehung in Richtung des Pfeiles 13 mit. Die Klinke 10 liegt dann schmiegend im Umfang bzw. innerhalb des Außendurchmessers des Steuerzahnrades 6, so daß sich die Arretier-antriebsscheibe 5 im wesentlichen stationär befindet und dieser gegenüber das Steuerzahnrad 6 sich frei drehen kann. Man erkennt, daß die Klinke 10 nicht etwa durch eine Feder in der erwähnten Ruhelage gehalten wird, sondern nur durch den Druckzapfen 7b und den Antriebszapfen 7c des Schwungrades 7. Die Klinke 10 liegt axial gesichert, nämlich einmal am hinteren Ende 10d des kurzen Hebels 10f, durch den Druckzapfen 7b gehalten, andererseits vorn über das Ende 10c des langen Hebels 10e, welches auf dem Antriebszapfen 7c ruht.

Tritt eine Rotationsbeschleunigung der Wickelachse 2 über einem angenommenen Grenzwert von z. B. 1,5 g in Bezug auf den Gurtbandauslauf auf, dann wird bei entsprechender Abstimmung der Justierfeder 11 die Schwungscheibe 7 das Bestreben haben, gegenüber dem Steuerzahnrad 6 aufgrund ihrer Drehbarkeit zurückzubleiben bzw. nachzueilen, d. h. im Sinne der Figur im Uhrzeigersinn zu drehen. Dabei wird der Antriebszapfen 7c am vorderen Ende 10c der Klinke 10 diese um die Lagerbohrung 10a soweit auslenken, daß die mit dem Steuerzahnrad 6 mitrotierende Klinke 10 in die Innenverzahnung 5d der Arretier-Antriebsscheibe 5 eingreift. Dann wird der vorstehend im Zusammenhang mit der fahrzeugsensitiven Einrichtung beschriebene Einsteuervorgang der Arretier-Antriebsscheibe 5 mit der Steuerkurve 5a an der Blockierklinke 4 in gleicher Weise eingeleitet und vollzogen.

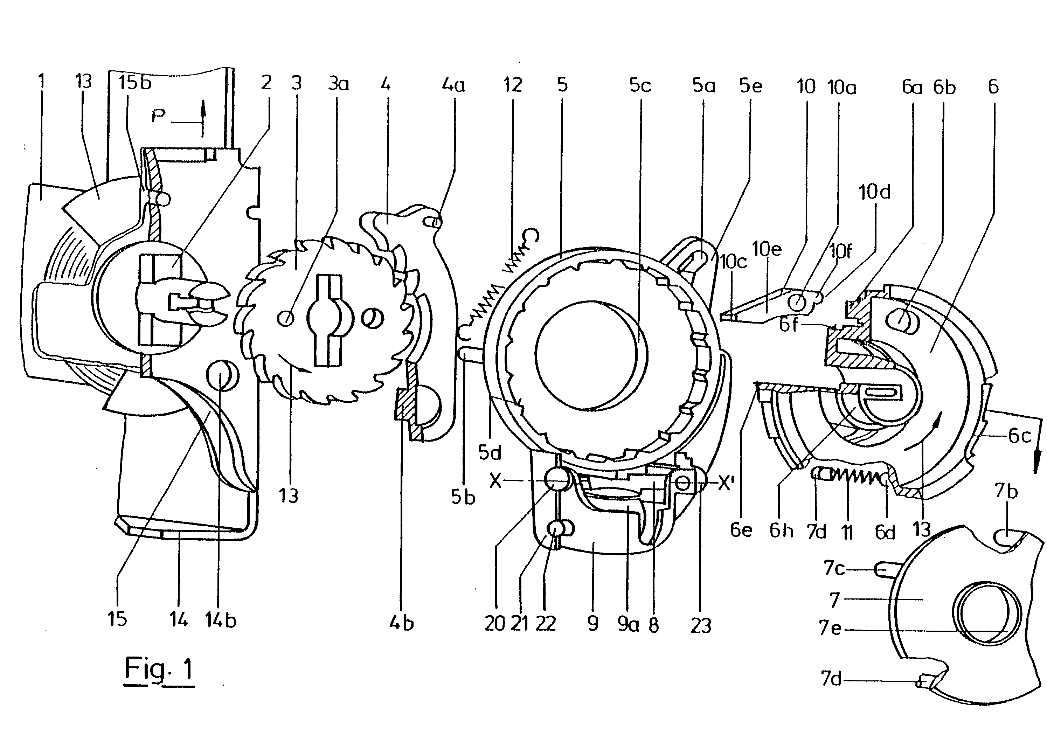

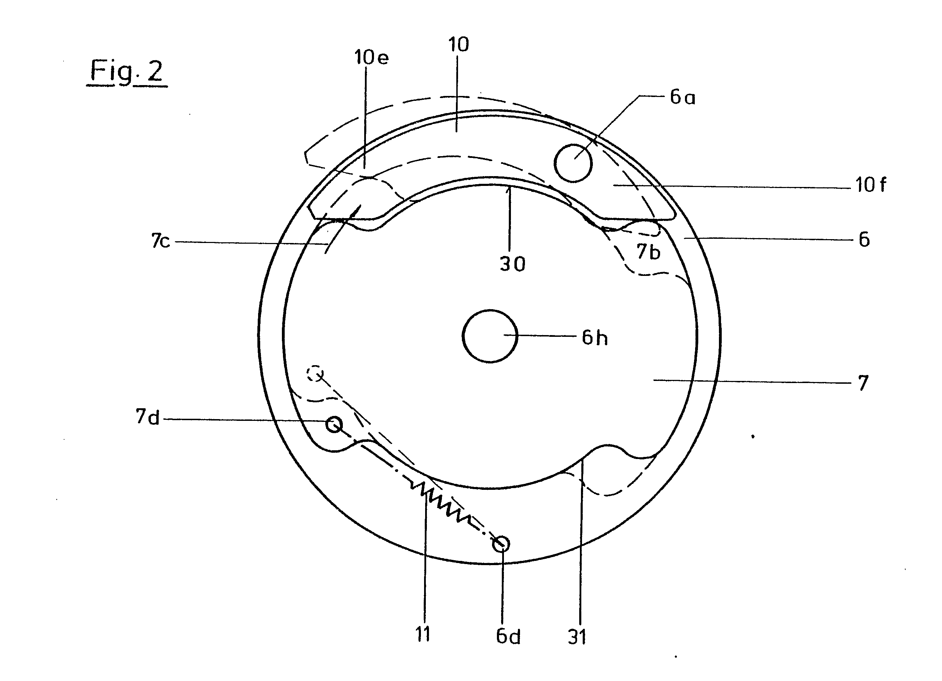

Bei der Ausführungsform der Figur 1 wurde eine spezielle Ausgestaltung des Steuerzahnrades 6 veranschaulicht, und die Drehträgheitsmasse war die Schwungscheibe 7 mit den Zapfen 7b, 7c und 7d. Bei der Ausführungsform nach Figur 2 ist die Drehträgheitsmasse eine abgeflachte, ebene Platte 7, deren Ebene parallel zu der des Steuerzahnrades 6 liegt, welches im Hintergrund schematisch ebenfalls angedeutet ist. Am Steuerzahnrad 6 ragt ein Lagerzapfen 6a zum Betrachter der Figur 2 nach vorn heraus, und um diesen ist die Klinke 10 schwenkbar. In derselben Ebene wie die Klinke 10 liegt auch die Schwungplatte 7, auf dem Lagerzapfen 6h gelagert. Die Scheibenform der Platte 7 gemäß Figur 2 ist durch eine obere Ausnehmung 30 und eine untere Ausnehmung 31 unterbrochen. Es handelt sich hier um längliche, über einen Teil des Umfanges angeordnete Ausnehmungen, die bezüglich des Lagerzapfens 6h auf diametral gegenüberliegenden Seiten angeordnet sind. Die obere Ausnehmung 30 wird durch zwei Vorsprünge 7b und 7c begrenzt, an welcher die Enden der Klinke 10 anliegen können. Die ausgezogenen Linien zeigen den kraftschlüssigen Gleichgewichtszustand, die gestrichelten Linien die ausgelenkte oder Ruhelage.

Die der oberen Ausnehmung 30 gegenüberliegende Ausnehmung 31 ähnlicher Gestalt läßt die oben bereits beschriebene, gurtbandsensitive Justierfeder 11 erkennen, die einerseits am Zapfen am Steuerzahnrad 6 gehaltert und andererseits in einem Loch, an einer Öse oder dergleichen befestigt ist, die bei der Ausführungsform der Figur 2 zum Vergleich mit der der Figur 1 ebenfalls mit 7b bezeichnet ist. Man sieht, wie im ausgelenkten oder Ruhezustand die Klinke 10 schmiegend innerhalb des Umfanges des Steuerzahnrades 6 liegt, so daß sich das Steuerzahnrad ungehindert innerhalb der Arretier-Antriebsscheibe 5 drehen kann. Eilt nun bei übermäßigem Gurtauszug (höhere Beschleunigung und Geschwindigkeit) das Steuerzahnrad 6 der Trägheitsplatte 7 voraus, dann tritt der mit gestrichelten Linien gezeigte Zustand ein, als würde die Trägheitsplatte 7 in der Darstellung der Figur 2 bezüglich des Steuerzahnrades 6 nach rechts gedreht. Der Vorsprung 7c bewegt sich dann in Richtung des schwach gebogenen Pfeiles in Figur 2 links oben. Da auf der gegenüberliegenden Seite der Vorsprung 7b der Schwungplatte 7 ebenfalls nach rechts wandert und Raum für die Bewegung der Klinke 10 freigibt, kann sich diese in die mit gestrichelten Linien dargestellte Position bewegen und den Sperrvorgang einleiten.

Man kann sich vorstellen, daß die Klinke 10 in derselben Ebene wie die Schwungplatte 7 vor oder auch alternativ hinter dem Steuerzahnrad 6 angeordnet sein kann.

Schließlich ist in Figur 1 auch noch die Dreheinstellmöglichkeit des Massenkraftsensors 8, 9 längs der Achse X-X' dargestellt. Das Sensorgehäuse 9 ist in einer Zunge 21 unter der Arretier-Antriebsscheibe 5 angebracht, und wird mittels oberer Drehstifte 20 (bei Betrachtung der Figur 1 vorn) und 23 (hinten) gehalten. Die Zunge 21 ist der Deutlichkeit halber hier abgeschnitten gezeigt. Unter dem vorderen oberen Drehstift 20 ist am Sensorgehäuse 9 ein kleiner ausgestalteter Einstellstift 22 angespritzt, der je nach Fahrzeugtyp und mithin Einbauwinkel des Gurtautomaten in unterschiedlichen Positionen bzw. unter solchen Winkeln zum oberen Drehstift 20 angeordnet sein kann, daß für verschiedene Fahrzeugtypen und Einbauwinkeln in billiger und einfacher Weise ein und derselbe Massenkraftsensor 8, 9 verwendet werden kann.

**Patentansprüche**

1. Gurtaufrollschnellsperrautomat mit einem Hauptgehäuse (14), einer Wickelachse (2) mit zugeordneter Wickelfeder und aufgewickeltem Gurtband (1) sowie mit einem Blockiermechanismus, bestehend aus einem Massenkraftsensor (8, 9), einer beweglich angeordneten Blockierklinke (4), einem Blockierzahnrad (3), einem konzentrisch zur Wickelachse (2) im Gehäuse gelagerten Steuerteil (5, 6) mit einer konzentrisch zur Wickelachse (2) und gegenüber derselben frei drehbaren Arretierantriebsscheibe (5) mit Innenverzahnung (5d), einem Steuerzahnrad (6) mit Außenverzahnung (6c) und einer frei drehbar gelagerten Klinke (10) und mit einer Drehträgheitsmasse (7) zum Betätigen der Blockierklinke (4) bei übermäßiger Gurtbandbeschleunigung, dadurch gekennzeichnet, daß das Steuerteil (5, 6) den Massenkraftsensor (8, 9) trägt, daß die Arretier-antriebsscheibe (5) zum Einrasten der Blockierklinke (4) in das Blockierzahnrad (3) eine Steuerkurve (5a) aufweist, daß die Drehträgheitsmasse (7) relativ zum Steuerzahnrad (6) beweglich angeordnet ist, daß die Lagerstelle (10a) der Klinke (10) unter Bildung eines langen (10e) und eines kurzen Hebels (10f) außermittig angeordnet ist und daß an der Drehträgheitsmasse (7) Vorsprünge (7b, 7c) mit den Enden (10d, 10c) der Klinke (10) in Eingriff bringbar sind.

2. Sperrautomat nach Anspruch 1, dadurch gekennzeichnet, daß die Drehträgheitsmasse als Schwungscheibe (7) mit einseitig davon herausstehenden Zapfen (7b, 7c) ausgebildet ist.

3. Sperrautomat nach Anspruch 1, dadurch gekennzeichnet, daß die Drehträgheitsmasse (7) eine ebene, parallel zur Ebene des Steuerzahnrades (6) liegende Platte mit Ausnehmungen (30, 31) ist, deren Enden die Vorsprünge (7b, 7c) für den Eingriff mit der Klinke (10) sind, und daß die Klinke (10) in einer Ausnehmung (30) in derselben Ebene aufgenommen und drehbar gelagert ist wie die Trägheitsplatte (7).

4. Sperrautomat nach Anspruch 1 oder 2, dadurch gekennzeichnet, daß von der Hauptebene des Steuerzahnrades (6) nach einer Seite hin ein Lagerabsatz (6f) für den Innenring (5c) der Arretier-Antriebsscheibe (5) und in radialem Abstand davon ein Lagerzapfen (6a) für die Lagerbohrung (10a) der Klinke (10) befestigt sind, während auf der anderen Seite dieser Hauptebene ein Lagervorsprung (6h) für den Lagerinnenring (7e) der Schwungscheibe (7) angebracht ist und in Umfangsrichtung des Steuerzahnrades (6) im Abstand voneinander Löcher (6b) für die Aufnahme von Schwungscheibenzapfen (7b, 7c, 7d) vorgesehen sind.

5. Sperrautomat nach Anspruch 1, 2 oder 4, dadurch gekennzeichnet, daß der Lagerzapfen (6a) am Steuerzahnrad (6) im Abstand zwischen zwei Löchern (6b) derart angebracht ist, daß zwei der hindurchragenden Schwungscheibenzapfen (7b, 7c) an Schrägen an den Enden (10b, 10c) der Klinke (10) in Eingriff bringbar sind.

6. Sperrautomat nach einem der Ansprüche 1 bis 5, dadurch gekennzeichnet, daß die Innenzähne (5d) der Arretier-Antriebsscheibe (5) im zusammengebauten Zustand in der Eingriffsebene der am Steuerzahnrad (6) gelagerten Klinke (10) und die Außenzähne (6c) des Steuerzahnrades (6) in der Eingriffsebene der an der Arretier-Antriebsscheibe (5) drehbar gelagerten Sensorklinke (8) des fahrzeugempfindlichen Massenkraftsensors (8, 9) angeordnet sind.

7. Sperrautomat nach einem der Ansprüche 1 bis 6, dadurch gekennzeichnet, daß an der Arretier-Antriebsscheibe (5) eine Steuerkurve (5a) für die Aufnahme und Führung eines Steuerzapfens (4a) der Blockierklinke (4) angebracht und derart ausgelegt ist, daß der Steuerzapfen (4a) nur im unblockierten Zustand der Blockierklinke (4) und in dessen Nahbereichen in einer zwangssteuernden Kontur der Steuerkurve (5a) liegt, während diese in den übrigen Bereichen ohne Führungseingriff mit dem Steuerzapfen (4a) frei geschnitten ist, und daß die Zähne der Blockierklinke (4) sowie des Blockierzahnrades (3) selbsteinrastend gestaltet sind.

8. Sperrautomat nach einem der Ansprüche 1 bis 7, dadurch gekennzeichnet, daß der Steuerzapfen (4a) im Bereich des einen Endes der länglichen Blockierklinke (4) und deren Lager- und Haltezapfen (4b) im Bereich deren anderen Endes angebracht sind.

9. Sperrautomat nach einem der Ansprüche 1 bis 8, dadurch gekennzeichnet, daß der Lager- und Haltezapfen (4b) der Blockierklinke (4) durch Feinstanzen geformt ist.

10. Sperrautomat nach einem der Ansprüche 4 bis 9, dadurch gekennzeichnet, daß das Sensor-

gehäuse (9) des fahrzeugempfindlichen Massen-kraftsensors (8, 9) bei unterschiedlichen Einbauwinkeln um eine in der Ebene der Arretier-Antriebsscheibe (5) liegende Achse (X, X') bezüglich des Lotes drehbar und einstellbar ist.

## Claims

1. An automatic quick-locking belt retractor comprising a main housing (14), a winding shaft (2) with associated winding spring and belt (1) wound thereon and a locking mechanism comprising an inertia force sensor (8, 9), a movably arranged locking pawl (4), a locking sprоc-ket (3), a control member (5, 6) mounted concentrically with respect to the winding shaft (2) in the housing, with an arresting drive disc (5) with internal tooth arrangement (5d), which is freely rotatable concentrically with respect to the winding shaft (2) and relative thereto, a control sprocket (6) with external tooth arrangement (6c) and a freely rotatably mounted pawl (10), and a rotary inertia weight (7) for actuating the locking pawl (4) in the event of excessive belt acceleration characterised in that the control member (5, 6) carries the inertia force sensor (8, 9), that the arresting drive disc (5) has a control cam (5a) for engagement of the locking pawl (4) into the locking sprocket (3), that the rotary inertia weight (7) is arranged movably relative to the control sprocket (6), that the mounting location (10a) of the pawl (10) is arranged eccentrically, forming a long (10e) and a short lever (10f), and that projections (7b, 7c) on the rotary inertia weight (7) can be brought into engagement with the ends (10d, 10c) of the pawl (10).

2. An automatic locking unit according to claim 1 characterised in that the rotary inertia weight is in the form of a flywheel disc (7) with pins (7b, 7c) projecting on one side therefrom.

3. An automatic locking unit according to claim 1 characterised in that the rotary inertia weight (7) is a flat plate which is disposed parallel to the plane of the control sprocket (6), with recesses (30, 31) whose ends are the projections (7b, 7c) for engagement with the pawl (10), and that the pawl (10) is accommodated and rotatably mounted in a recess (30) in the same plane as the inertia plate (7).

4. An automatic locking unit according to claim 1 or claim 2 characterised in that towards one side from the main plane of the control sprocket (6) is fixed a mounting step (6f) for the internal ring (5c) of the arresting drive disc (5) and fixed at a radial spacing therefrom is a mounting pin (6a) for the mounting bore (10a) of the pawl (10) while disposed on the other side of said main plane is a mounting projection (6h) for the mounting internal ring (7e) of the flywheel disc (7) and holes (6b) disposed at a spacing from each other in the peripheral direction of the control sprocket (6) are provided for accommodating flywheel disc pins (7b, 7c, 7d).

5. An automatic locking unit according to claim 1, claim 2 or claim 4 characterised in that the mounting pin (6a) is disposed on the control sprocket (6) in the spacing between two holes (6b) in such a way that two of the flywheel disc pins (7b, 7c) projecting therethrough can be brought into engagement at inclined surfaces at the ends (10b, 10c) of the pawl (10).

6. An automatic locking unit according to one of claims 1 to 5 characterised in that the internal teeth (5d) of the arresting drive disc (5) in the assembled condition are arranged in the plane of engagement of the pawl (10) mounted on the control sprocket (6) and the external teeth (6c) of the control sprocket (6) are arranged in the plane of engagement of the sensor pawl (8) of the vehicle-sensitive inertia force sensor (8, 9), said pawl (8) being mounted rotatably on the arresting drive disc (5).

7. An automatic locking unit according to one of claims 1 to 6 characterised in that disposed on the arresting drive disc (5) is a control cam (5a) for receiving and guiding a control pin (4a) of the locking pawl (4), the control cam being of such a configuration that the control pin (4a) lies in a positively controlling contour of the control cam (5a) only in the unlocked condition of the locking pawl (4) and in the regions adjacent thereto while said control cam is cut free in the other regions without guiding engagement with the control pin (4a) and that the teeth of the locking pawl (4) and of the locking sprocket (3) are of a self-engaging configuration.

8. An automatic locking unit according to one of claims 1 to 7 characterised in that the control pin (4a) is mounted in the region of the one end of the elongate locking pawl (4) and the mounting and holding pin (4b) thereof is disposed in the region of the other end thereof.

9. An automatic locking unit according to one of claims 1 to 8 characterised in that the mounting and holding pin (4b) of the locking pawl (4) is formed by fine stamping.

10. An automatic locking unit according to one of claims 4 to 9 characterised in that the sensor housing (9) of the vehicle-sensitive inertia force sensor (8, 9), in different angles of installation, can be rotated and set relative to the vertical about an axis (X, X') which is in the plane of the arresting drive disc (5).

## Revendications

1. Dispositif automatique de blocage rapide d'un enrouleur de ceinture de sécurité comportant un boîtier principal (14), un axe d'enroulement (2) avec un ressort d'enroulement associé et une ceinture enroulée (1) ainsi qu'avec un mécanisme de blocage, comprenant un détecteur de force d'inertie (8, 9), un cliquet de blocage (4) monté mobile, une roue dentée de blocage (3), un organe de commande (5, 6) logé concentrique à l'axe d'enroulement (2) dans le boîtier avec un disque de marche-arrêt (5) à denture intérieure (5d) concentrique à l'axe d'enroulement (2) et librement mobile par rapport à celui-ci, un pignon de commande (6) à denture extérieure (6c) et un cliquet (10) librement mobile en rotation et une masse d'inertie tournante (7) pour actionner le cliquet de blocage (4) en cas d'accélération excessive de la ceinture, caractérisé en ce que l'organe de commande (5, 6) porte le détecteur de force d'inertie (8, 9), en ce que le disque marche-arrêt (5) destiné à encliqueter le cliquet de blocage (4) dans le pignon d'arrêt (3) comprend une came de commande (5a), en ce que la masse d'inertie tournante (7) est montée mobile relativement au pignon de commande (6), en ce que le palier (10a) du cliquet (10) formant un levier long (10e) et un levier court (10f) est monté décentré, et en ce que des saillies (7b, 7c) ménagées sur la masse d'inertie tournante (7) peuvent venir s'engager dans les extrémités (10d, 10c) du cliquet (10).

2. Dispositif automatique de blocage selon la revendication 1, caractérisé en ce que la masse d'inertie tournante est un volant (7) avec des tenons (7b, 7c) faisant saillie d'un côté.

3. Dispositif automatique de blocage selon la revendication 1, caractérisé en ce que la masse d'inertie tournante (7) est une plaque plate disposée parallèlement au plan du pignon de commande (6) et munie d'évidements (30, 31) dont les extrémités forment les saillies (7b, 7c) pour venir en prise avec le cliquet (10), et en ce que le cliquet (10) est logé mobile en rotation dans un évidement (30) situé dans le même plan que la plaque d'inertie (7).

4. Dispositif automatique de blocage selon la revendication 1 ou 2, caractérisé en ce qu'une portée de palier (6f) pour la bague intérieure (5c) du disque de marche-arrêt (5) et un pivot de palier (6a) écarté radialement de celui-ci pour l'alésage de palier (10a) du cliquet (10) sont fixés à partir du plan principal du pignon de commande (6) en s'étendant vers un côté, tandis qu'une saillie de palier (6h) pour la bague intérieure (7e) du volant (7) est disposée de l'autre côté de ce plan principal et que des trous (6b) écartés les uns des autres destinés à recevoir des tenons du volant (7b, 7c, 7d) sont prévus dans le sens périphérique du pignon de commande (6).

5. Dispositif automatique de blocage selon la revendication 1, 2 ou 4, caractérisé en ce que le pivot (6a) est disposé écarté entre deux trous (6b) sur le pignon de commande (6) de manière que deux des tenons traversants du volant (7b, 7c) peuvent venir s'engager sur des parties obliques aux extrémités (10b, 10c) du cliquet (10).

6. Dispositif automatique de blocage selon l'une des revendications 1 à 5, caractérisé en ce que les dents intérieures (5d) du disque de marche-arrêt (5) sont disposées à l'état assemblé dans le plan d'engagement du cliquet (10) sur le pignon de commande (6) et les dents extérieures (6c) du pignon de commande (6) dans le plan d'engagement du cliquet (8) du détecteur de force d'inertie (8, 9) sensible du véhicule monté mobile en rotation sur le disque de commande de blocage (5).

7. Dispositif automatique de blocage selon l'une des revendications 1 à 6, caractérisé en ce qu'une came de commande (5a) destinée à recevoir et à guider un tenon de commande (4a) du cliquet de blocage (4) est fixée sur le disque de marche-arrêt (5) et conçue de manière que le tenon de commande (4a) se trouve dans un contour d'actionnement de la came de commande (5a) seulement lorsque le cliquet (4) se trouve à l'état non bloqué et dans ses zones limitrophes, tandis que celle-ci est en libre intersection avec le pivot de commande (4a) dans les autres zones sans engagement de guidage, et en ce que les dents du cliquet (4) ainsi que du pignon de blocage (3) sont conformées de manière à s'encliqueter automatiquement.

8. Dispositif automatique de blocage selon l'une des revendications 1 à 7, caractérisé en ce que le tenon de commande (4a) est fixé au niveau de l'une des extrémités du cliquet long (4) et que ses pivots de paliers et de retenue (4b) sont fixés au niveau de l'autre extrémité.

9. Dispositif automatique de blocage selon l'une des revendications 1 à 8, caractérisé en ce que le pivot de palier et de retenue (4b) du cliquet de blocage (4) est formé par estampage de précision.

10. Dispositif automatique de blocage selon l'une des revendications 4 à 9, caractérisé en ce que le boîtier (9) du détecteur de force d'inertie (8, 9) sensible du véhicule est mobile en rotation et réglable par rapport à la perpendiculaire autour d'un axe (X, X') situé dans le plan du disque de marche-arrêt (5) pour différents angles de montage.

0 124 633

Fig. 1

Fig. 2